Europäisches Patentamt

European Patent Office

Office européen des brevets

(19)

(11) EP 0 889 140 B1

(12) EUROPÄISCHE PATENTSCHRIFT

(45) Veröffentlichungstag und Bekanntmachung des Hinweises auf die Patenterteilung:
13.01.1999 Patentblatt 1999/02

(51) Int Cl.⁶: **C21D 10/00**

(21) Anmeldenummer: 97112748.5

(22) Anmeldetag: 24.07.1997

(54) **Verfahren zum Betreiben einer Maschine für die Entspannung von Werkstücken**

Method of operating a machine for the stress relieving of workpieces

Procédé de fonctionnement d'une machine de relaxation de pièces

(84) Benannte Vertragsstaaten:
DE ES FR GB IT

(43) Veröffentlichungstag der Anmeldung:
07.01.1999 Patentblatt 1999/01

(73) Patentinhaber: VSR Martin Engineering GmbH
65388 Schlangenbad (DE)

(72) Erfinder:
• Schneider, Dietmar
65388 Schlangenbad (DE)

• Vava, Christian
Worchester 01607 MA (US)

(74) Vertreter: **Grünecker, Kinkeldey,
Stockmair & Schwanhäusser Anwaltssozietät
Maximilianstrasse 58
80538 München (DE)**

(56) Entgegenhaltungen:
EP-B- 0 261 273      WO-A-93/18376
GB-A- 2 088 269      US-A- 3 677 831
US-A- 4 446 733      US-A- 4 968 359

## Beschreibung

Die Erfindung bezieht sich auf ein Verfahren für eine Maschine zum Entspannen von Werkstücken, bei dem das Werkstück aufgrund ausgewählter Drehzahlwerte eines Vibrators in Schwingung versetzt wird, wobei die Auswahl der Drehzahlwerte einer Messung entnommen wird, welche das Schwingverhalten des Werkstücks wiedergibt.

Innere Spannungen in metallischen Werkstücken können dadurch reduziert werden, daß man das Werkstück Vibrationen aussetzt, die ein Abklingen der inneren Spannungen bewirken.

Zur Entspannung werden diese Werkstücke normalerweise mit Drehzahlen im Bereich von 1200 bis 6000 U/min oder auch bis 12000 U/min angeregt. Diese Drehzahlen entsprechen Anregungsfrequenzen von 20 - 100 Hz bzw. 200 Hz. Es stellt allerdings ein Problem dar, diejenigen Anregungsfrequenzen zu ermitteln, mit denen eine optimale und gezielte Reduktion der inneren Spannungen erreichbar ist. In den Publikationen GB 20 88 269, US 36 77 831, US 44 46 733 und EP 0 261 273 B1 sind Verfahren beschrieben, mit denen sich geeignete Frequenzen zur Anregung der Werkstücke ermitteln lassen. Dabei wird in einem Testlauf innerhalb des Arbeitsbereichs, im folgenden auch Macroscanning genannt, zunächst ermittelt, bei welchen Drehzahlen oder Anregungsfrequenzen das Werkstück in starke Vibration gerät (Resonanzfrequenz). Das Vibrationsverhalten wird gewöhnlich mit Hilfe eines Beschleunigungsmessers bestimmt, der auf dem Werkstück befestigt ist. Zur Beseitigung der inneren Spannungen wird das Werkstück anschließend Vibrationen mit Frequenzen ausgesetzt, bei denen das Werkstück während der Testphase Resonanzen gezeigt hat. Bei Werkstücken mit einer komplizierten räumlichen Struktur gibt es gewöhnlich so viele Spitzenwerte in einem Beschleunigungswert-Anregungsfrequenz-Diagramm, daß für die Entspannungsphase eine Auswahl getroffen werden muß.

Bei dem Verfahren nach US 44 46 733 werden nur die im Ultraschallbereich liegenden Oberwellenschwingungen zur Entspannung benutzt. Bei dem Verfahren nach EP 0 261 273 B1 werden die außerhalb des Arbeitsbereichs liegenden Oberwellenschwingungen lediglich als Berechnungsgrundlage für Anregungsfrequenzen aus dem niedrigen Arbeitsfrequenzbereich verwendet. Die Entspannung wird dementsprechend nur mit niedrigen Frequenzen ausgeführt.

Es ist bekannt, daß die zur Entspannng notwendigen Bewegungen im mikroskopischen Bereich nicht unmittelbar durch die Anregungsfrequenzen des Vibrators, sondern nur durch deren Oberwellen angeregt werden. Bei der bisherigen Ermittlung der Anregungsfrequenzen ging man davon aus, daß Anregungsfrequenzen, die im Testlauf zu besonders hohen Spitzenwerten geführt haben, gleichzeitig zu einer besonders großen Anregung des Werkstücks im interessierenden, mikroskopischen Bereich führen. In der Praxis zeigt sich jedoch, daß nicht alle Drehzahlwerte, die im Testlauf die Amplitudenmaxima erzielt haben, auch im interessierenden Frequenzbereich zu einer hohen Anregung führen.

Es ist deshalb Aufgabe der Erfindung, ein Verfahren zum Betreiben einer Maschine für die Entspannung von Werkstücken anzugeben, bei dem das Werkstück mit Vibrationen solcher Drehzahlwerte des Vibrators angeregt wird, mit welchen sich mit geringem Aufwand ein adäquater Eigenspannungsabbau des Werkstücks erzielen läßt.

Diese Aufgabe wird durch die Merkmale des Anspruchs 1 gelöst.

Dazu wird für diejenigen Drehzahlwerte, bei denen im während der Testphase gemessenen Kurvenverlauf Maxima auftreten, jeweils ein Effizienzwert ermittelt, der die Effizienz angibt, mit der das Werkstück in den für den Entspannungsvorgang interessierenden Frequenzbereichen in Schwingung versetzt wird. Besonders einfach läßt sich ein solcher Effizienzwert ermitteln, wenn der gemessene Kurvenverlauf aus dem Zeitbereich in den Frequenzbereich transformiert wird und anschließend die Energie der spektralen Komponenten oberhalb der Grundschwingung zu der Gesamtenergie, d.h. inklusive der Grundschwingung, ins Verhältnis gesetzt wird. Bei Auswertung der Korrelation der Effizienzwerte mit den ausgewählten Drehzahlwerten werden diejenigen Drehzahlwerte ermittelt und für die Entspannung des Werkstücks herangezogen, welche die höchsten zugehörigen Effizienzwerte aufweisen. So ist es möglich, daß der Entspannungsvorgang mit einer nur minimalen Anzahl von Anregungsdrehzahlwerten in kürzester Zeit bei gleichzeitig optimalem Entspannungsergebnis durchgeführt werden kann. Die Verbesserung des Entspannugsvorgangs beruht darauf, daß - im Vergleich zu herkömmlichen Verfahren - nur solche Entspannungsfrequenzen verwendet werden, die im für die Entspannung notwendigen Frequenzbereich das Werkstück am besten anregen.

In einer bevorzugten Ausführungsform lassen sich die zu verwendenden Entspannungsfrequenzen dadurch weiter reduzieren und der Entspannungsvorgang weiter beschleunigen, daß nur solche Frequenzen zur Entspannung verwendet werden, die kein ganzzahliges Vielfaches einer weiteren ausgewählten Anregungsfrequenz darstellen, wobei nur diejenige Frequenz zur Entspannung des Werkstückes verwendet wird, die zu einer besseren Anregung im interessierenden Frequenzbereich führt, d.h., von diesen Frequenzen wird diejenige verwendet, der der höhere Effizienzwert zugeordnet ist. Auf diese Weise läßt sich die Anzahl der Entspannungsfrequenzen und die Dauer des Entspannungsvorgangs weiter reduzieren.

Gemäß Anspruch 3 läßt sich die Aussagekraft eines Effizienzwertes, der nach Anspruch 1 zur Auswahl der zur Entspannung zu verwendenden Frequenzen dient, durch ein aufwendigeres Berechnungsverfahren weiter verbessern. Dazu werden alle Effizienzwerte berechnet, welche die Anregungseffizienz von Drehzahlfrequenzen angeben, die innerhalb eines bestimmten Bereiches um die aufgrund des gemessenen Kurvenverlaufs ausgewählten Drehzahlwerte liegen. Dieser Drehzahlbereich wird vorzugsweise dadurch bestimmt, daß alle Drehzahlwerte berücksichtigt werden, deren Amplitude jeweils ausgehend von einem Maximalwert eine Schwellenamplitude nicht unterschreitet, die um einen vorbestimmten Faktor unterhalb des Maximalwertes liegt. Dieser Faktor beträgt vorzugsweise $1/\sqrt{2}$. Die bei diesem Ermittlungsvorgang verwendeten Effizienzwerte geben sehr viel genauer die wirklich im interessierenden Frequenzbereich erzielte Anregung an, da Ungenauigkeiten in der Testphase und bei der Anregung zur Entspannung ausgeglichen werden. So entspricht der ermittelte Effizienzwert sehr viel besser der wirklich interessierenden Anregung.

Der Entspannungsvorgang kann gemäß Anspruch 4 dadurch weiter verbessert werden, daß die zur Entspannung des Werkstücks verwendete Drehzahlfrequenz jeweils innerhalb eines vorbestimmten Bereiches variiert wird. Die Breite des Bereichs entspricht vorzugsweise derjenigen, die zur Berechnung eines mittleren Effizienzwertes gemäß Anspruch 3 verwendet wird.

Einerseits entspricht bei einer solchen Entspannung der ermittelte mittlere Effizienzwert genau dem zur Entspannung verwendeten Anregungsfrequenzbereich, andererseits werden so im für die Entspannung relevanten Frequenzbereich Schwingungen mit entsprechend variierender Frequenz erzeugt, um dadurch mikroskopische Strukturen mit leicht schwankender Größe zur erwünschten Bewegung veranlassen zu können.

In einer bevorzugten Weiterbildung des Verfahrens werden auch während der Testphase die Drehzahlwerte in einem festgelegten Bereich um die jeweilige Anrgungsdrehzahl herum kontinuierlich oder in kleinen Schritten variiert, im folgenden auch Microscanning genannt, so daß die Anregungsfrequenz innerhalb des Variationsbereichs während der Anregung mal ansteigend und mal absteigend ist. Vorteilhaft ist bei einer solchen Anregung, daß der zur Einstellung der Anregungsfrequenz verwendete Steuer- bzw. Regelkreis einfacher und billiger ausgeführt werden kann, da die Genauigkeit, mit der die Drehzahlfrequenz eingestellt werden muß, eine größere Schwankungsbreite aufweist und somit u.a. eine größere Totzeit in dem verwendeten Regelkreis verwendet werden kann.

Wird das Werkstück in der Testphase gezielt mit einer nicht-sinusförmigen periodischen Kraft angeregt, so wird das Werkstück neben der Grundschwingung zusätzlich von den entsprechenden Oberwellen in Schwingung versetzt. Damit läßt sich der Anteil erwünschter höherer Anregungsfrequenzen deutlich vergrößern.

Vorteilhaft wird die Variation, daß Microscanning, innerhalb des festgelegten Bereichs um die jeweilige Anregungsdrehzahl wiederholt durchgeführt, und aus den während jedes Microscanning-Durchlaufs gemessenen Amplitudenwerten wird, jeweils getrennt in Richtung ansteigender und abfallender Microscanning-Drehzahlwerte, ein Durchschnittswert der gemessenen Amplitudenwerte für jede der Anregungsdrehzahlen gebildet. Dadurch wird die Aussagekraft des gemessenen Amplitudenverlaufs deutlich verbessert, da der Einfluß statistischer Schwankungen reduziert wird. Im Bereich einer Resonanzamplitude wird diese bei mehrfachen MicroscanningDurchläufen mehrfach gemessen. Mit der Berechnung der Varianz aller gemessenen Resonanzamplituden läßt sich ein Parameter bestimmen, der angibt, inwieweit sich die Resonanzamplitude während der Anregung in den Microscanningdurchläufen geändert hat. Eine Änderung der Resonanzamplitude während der Microscanningdurchläufe in der Testphase führt zu einem größeren Varianzwert der angibt, inwieweit bereits die während der Testphase in das Werkstück injizierte Vibration zu einer Entspannung geführt hat. Auf diese Weise läßt sich zu jedem der Maximalwerte ein weiterer Effizienzwert angeben, der anzeigt, inwieweit sich ein solcher Drehzahlwert für eine schnelle Entspannung des Werkstücks eignet. Vorteilhaft wird dieser Effizienzwert, im folgenden Änderungseffizienz genannt, durch den Quotienten aus gemessenem Varianzwert und gemessener Resonanzamplitude gebildet.

Zur Ermittlung eines gemeinsamen Effizienzwertes für jeden der gemessenen Maximalwerte wird der Energieeffizienzwert (THD) und der Änderungseffizienzwert so miteinander verknüpft, daß sie sich jeweils gegenseitig verstärken. Das bedeutet, wenn sich der Wert eines Effizienzwertes vergrößert, so vergrößert sich auch der Wert des gemeinsamen Effizienzwertes. Auf diese Weise stellt der gemeinsame Effizienzwert ein kombiniertes Qualitätskriterium für jeden gemessenen Maximalwert dar, das sowohl angibt, wie gut sich mit der jeweiligen Anregungsdrehzahl geeignete Entspannungsfrequenzen in das Werkstück injizieren lassen und wie schnell die jeweilige Anregungsdrehzahl zu einer Entspannung des Werkstücks führt.

Eine solche Verknüpfung des Energieeffizienzwertes und des Änderungseffizienzwertes läßt sich beispielsweise durch Multiplikation beider Einzelwerte erreichen.

Nicht alle Drehzahlwerte im Bereich der jeweiligen Maxima des während der Testphase gemessenen Kurvenverlaufs sind gleichermaßen für die Entspannung des Werkstücks geeignet. Mit der Vibration eines Werkstücks mit bestimmten Frequenzen ist es nicht nur möglich, innere Spannungen des Werkstücks zu beseitigen, sondern ebenso, diese zu verstärken. Um ein solches spannungsverstärkendes, von einem entspannenden Verhalten unterscheiden zu können, muß das Schwingungsverhalten des Werkstücks in einem Anregungsfrequenzbereich um die jeweils ausgewählten Drehzahlfrequenzen untersucht werden. Die Anregungsfrequenz schwankt dazu in einem Bereich um die jeweils ausgewählte Anregungsfrequenz, um das Schwingungsverhalten des Werkstücks bei ansteigenden und abnehmenden Frequenzen ermitteln und auswerten zu können. Aufgrund der Unterschiede im gemessenen Kurvenverlauf bei ansteigenden und abnehmenden Frequenzen lassen sich ein spannungsverstärkendes (hard-spring-Verhalten) und ein entspannendes Verhalten (soft-spring-Verhalten) auseinanderhalten. Zur Entspannung des Werkstücks eignen sich nur diejenigen Frequenzen, die ein soft-spring-Verhalten aufweisen. So läßt sich nicht nur die Anzahl der zu verwendenden Entspannungsfrequenzen weiter reduzieren, sondern auch eine unerwünschte Verstärkung von inneren Spannungen ausschließen.

Vorteilhafterweise werden diejenigen Drehzahlwerte, die ein "hard-spring"-Verhalten aufweisen weiterhin dazu verwendet, um solche Drehzahlwerte nicht zur Entspannung zu verwenden, die zwar ein "soft-spring"-Verhalten aufweisen, deren Drehzahlwert aber ein ganzzahliges Vielfaches oder einen Teiler einer der "hard-spring"-Frequenzen darstellt. Auf diese Weise wird vermieden, daß ungewollt innere Spannungen verstärkt werden.

In den Ansprüchen 12 und 13 werden Verfahren angegeben, mit denen sich ein soft-spring-Verhalten von einem hard-spring-Verhalten unterscheiden läßt. Entscheidend für die Unterscheidung ist das charakteristische Auftreten von Amplitudensprüngen bei zunehmenden und abnehmenden Anregungsfrequenzen. Sowohl bei zunehmenden als auch bei abnehmenden Anregungsfrequenzen tritt ein kleiner und ein großer Amplitudensprung auf. Ein Verfahren nach Anspruch 12 wertet aus, welcher dieser beiden Sprünge bei zunehmenden und welcher bei abnehmenden Frequenzen auftritt. Dabei erfolgt der große Amplitudensprung immer von einer großen Amplitude zu einer kleinen Amplitude und der kleine Amplitudensprung immer von einer kleineren Amplitude zu einer größeren Amplitude. Das hard-spring-Verhalten zeichnet sich dadurch aus, daß der große Amplitudensprung bei ansteigender Anregungsfrequenz erfolgt und der kleine Amplitudensprung bei abnehmender Anregungsfrequenz. Demgegenüber weist ein soft-spring-Verhalten einen kleinen Amplitudensprung bei zunehmender Anregungsfrequenz und einen großen Amplitudensprung bei abnehmender Anregungsfrequenz auf. Gemäß Anspruch 13 läßt sich alternativ untersuchen, bei welchen Anregungsfrequenzen diese Amplitudensprünge auftreten. Bei einem soft-spring-Verhalten erfolgt der große Amplitudensprung bei einer kleineren Anregungsfrequenz als der kleine Amplitudensprung, bei einem hard-spring-Verhalten erfolgt der große Amplitudensprung bei einer größeren Anregungsfrequenz als der kleine Amplitudensprung. Beide Verfahren erlauben für sich alleine oder in Kombination angewendet, nur die Frequenzen auszuwählen, mit denen eine wirkliche Entspannung des Werkstücks möglich ist.

Um eine unerwünschte Zunahme von inneren Spannungen zu vermeiden, sollten nicht nur die Drehzahlwerte, denen eindeutig ein "hard-spring"-Verhalten zugeordnet werden kann, nicht zur Entspannung verwendet werden, sondern auch alle diejenigen Drehzahlwerte, denen nicht eindeutig ein "soft-spring"-Verhalten zugeordnet werden kann.

Für eine wirkliche Entspannung ist es vorteilhaft, das Werkstück zur Entspannung nicht nur mit einer Grundfrequenz, sondern durch Verwendung einer nicht-sinusförmigen Kraft das Werkstück mit einer großen Zahl von Oberwellen anzuregen.

Besonders vorteilhaft ist es, die Entspannung des Werkstücks gleichzeitig mit zwei Vibratoren durchzuführen. Bevorzugt arbeiten beide Vibratoren mit leicht unterschiedlicher Anregungsdrehzahl.

Um das jeweilige Werkstück in einer möglichst kurzen Zeit möglichst vollständig von inneren Spannungen zu befreien, ist es neben den bisher beschriebenen Maßnahmen zur Ermittlung der geeignetsten Anregungsfrequenzen möglich, die Dauer, mit der das Werkstück mit einer bestimmten Frequenz entspannt wird, durch Überwachung des Schwingverhaltens des Werkstücks so kurz wie möglich zu halten. Dazu wird das Werkstück nur so lange in Schwingung versetzt, wie es zur Erreichung eines vorbestimmten Grades der Entspannung notwendig ist. Für diesen Zweck wird der während der Entspannungsphase gemessene Kurvenverlauf ausgewertet. Erreicht die Amplitudenüberhöhung im Bereich der gemessenen Anregungsfrequenz einen vorbestimmten Grad an Symmetrie und/oder einen vorbestimmten Grad der Flachheit, so kann der mit dieser Frequenz durchgeführte Entspannungsvorgang abgebrochen werden, da eine über diesen vorbestimmten Wert hinausgehende Entspannung des Werkstücks nicht mehr notwendig ist.

Ausführungsbeispiele der Erfindung werden anhand der Zeichnung näher erläutert. Es zeigen:

Fig.1a und 1b     ein typisches Frequenz-Amplituden-Diagramm und zwei Diagramme, in denen für die Anregungsfrequenzen A und B des Diagramms in Fig. 1a über der Amplitude die Anregungskraft aufgetragen ist;

Fig. 2     ein Frequenz-Amplituden-Diagramm für ein hard-spring-Verhalten und ein soft-spring-Verhalten.

Bei Entspannungsmaschinen der vorliegenden Art geht man davon aus, daß sich nicht alle Frequenzen gleich gut eignen, ein Werkstück zu entspannen. Üblicherweise benutzt man Resonanzfrequenzen als Anregungsschwingungen. Aber auch nicht alle Resonanzfragen sind gleich gut geeignet. Das hier beschriebene Verfahren dient dazu, die am besten geeigneten Anregungsfrequenzen zu ermitteln.

Mit Hilfe der hier beschriebenen Analyse wird die energetische Transfereffizienz zur Entspannung ausgewertet. Die Transfereffizienz wird aus der spektralen Zusammensetzung berechnet.

Für die Ermittlung der Spektralantwort des Werkstücks während einer Testphase wird das Werkstück mit Drehzahlfrequenzen angeregt, die kontinuierlich oder in kleinen Schritten ansteigend und abnehmend den Arbeitsbereich durchlaufen (Macroscanning).

Da die Motorwelle des Vibrators während einer Umdrehung nicht gleichförmig belastet wird, hat die dem Werkstück zugeführte momentane Anregung eine um einen Mittelwert variierenden momentanen Frequenzwert. Auf diese Weise wird nicht nur ein spezieller Frequenzwert angeregt, sondern ein Bereich um die mittlere Winkelgeschwindigkeit durchlaufen. Auch bei herkömmlichen Vorrichtungen wird, auch wenn beabsichtigt ist, den Vibrator mit konstanter Drehzahl zu betreiben, ein Bereich um die mittlere Winkelgeschwindigkeit durchlaufen, wobei eine sehr viel breitere Anregung stattfindet. Herkömmliche Verfahren sind nicht in der Lage, diese Frequenzverbreiterung vorteilhaft zu verwerten.

In einer anderen Ausführungsform wird das Werkstück mit einem Schlag angeregt, dessen Frequenzspektrum sich über alle Frequenzen erstreckt. Das Schwingverhalten des Werkstücks wird durch Auswertung der Impulsantwort ermittelt, die für die weitere Verarbeitung in eine spektrale Darstellung umgewandelt wird.

Wird das Werkstück gemäß der ersten Ausführungsform angeregt, so durchläuft die Drehzahlfrequenz kontinuierlich oder in kleinen Schritten auf- und absteigend den Arbeitsfrequenzbereich. Eine solche Variation der Anregungsfrequenz (Microscanning), erfolgt sehr viel schneller als beim Macroscanning, aber mit sehr viel kleinerer Variationsbreite. Gleichzeitig wird die jeweilige momentane Beschleunigung des Werkstücks gemessen und aufgezeichnet. Dazu ist auf dem Werkstück ein Beschleunigungsmesser angebracht, an einer Stelle, welche für die Übertragung der auszuwertenden Frequenzen am besten geeignet ist.

Für den Beschleunigungsmesser wird vorteilhafterweise ein 3D-Beschleunigungssensor verwendet. Die Verwendung eines solchen 3D-Beschleunigungsmessers hat mehrere Vorteile: während der Testphase können gefährliche Spitzenwerte erfaßt werden, die von mechanischen Resonanzen herrühren, die von den physikalischen Abmessungen des Werkstücks bestimmt werden. Diese mechanischen Resonanzen unterscheiden sich von den rechteckigen der Motorwelle und der Werkstückoberfläche, auf welcher der Vibrator befestigt ist. Mit einem 1D-Beschleunigungssensor können solche Resonanzen nicht erfaßt werden, wodurch das Zusammenwirken von Motor und Vibrator verschlechtert wird. Andererseits arbeiten einige solcher Geräte in einer lauten Arbeitsumgebung, wobei dieses industrielle Rauschen für viele dieser Geräte von dem Nutzsignal nicht mehr zu trennen ist. In solchen Fällen ist es erforderlich, Zusatzinformation über das Umgebungsrauschen oder die inneren Signale zu erhalten. Dazu lassen sich die drei Signale verwenden, die von einem 3D-Beschleunigungsmesser zur Verfügung gestellt werden. Die von einem solchen Meßaufnehmer gelieferten Signale lassen sich beispielsweise nach dem optimalen Filterverfahren von Kalman auswerten. Die drei Signale weisen Phasenverzögerungen zwischen den drei Signalen auf, die von dem Meßaufnehmer, den physikalischen Maßen des Werkstückes und der Schallgeschwindigkeit des Materials des Werkstücks verursacht werden.

Die aufgezeichneten Daten werden in eine spektrale Darstellung umgewandelt, beispielsweise durch Verwendung einer Fast-Fourier-Transformation, um die Spektralantwort des Werkstücks zu erhalten.

Anschließend kann die berechnete spektrale Antwort Rauschreduktionsverfahren unterworfen werden, beispielsweise durch Akkumulation der erhalten Daten und durch spezielle Filterverfahren (z.B. nach Prony oder Pisarenko).

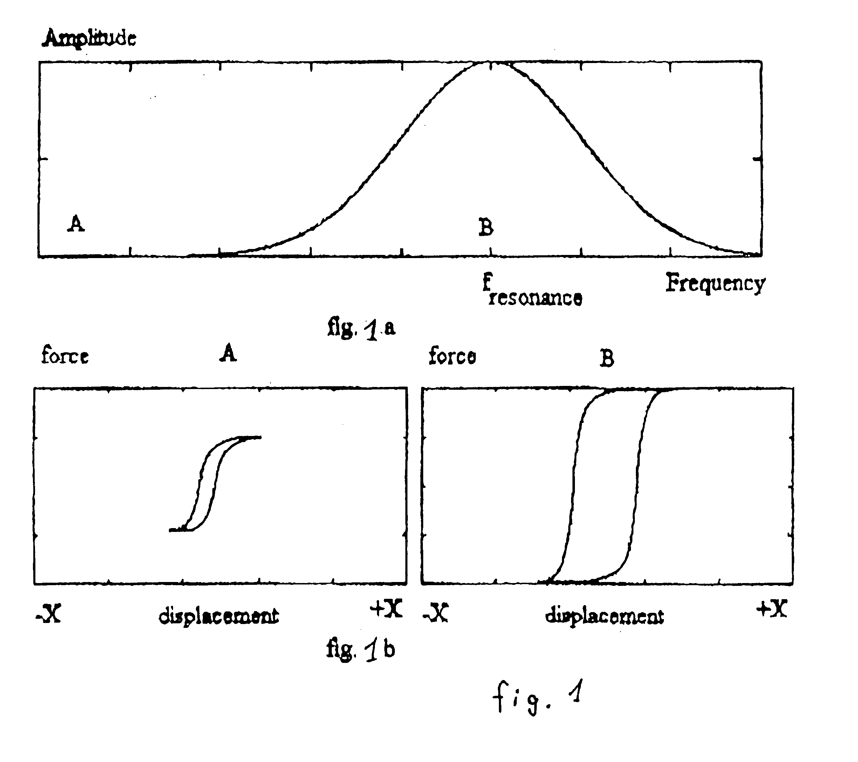

Alle Werkstücke weisen in Abhängigkeit von der Anregungsfrequenz Resonanz- und Nichtresonanzverhalten auf. Resonanzamplituden haben einen maximalen Pegel bei Resonanzfrequenzen, die für jedes Werkstück individuell verschieden sein können. In Fig. 1a ist die Schwingungsamplitude des Werkstücks über der Schwingungsfrequenz aufgetragen. Bei $f_{resonance}$ weist der dargestellte Kurvenverlauf ein Maximum auf. Für die Frequenzen A und B ist in Fig. 1b dargestellt, welche Anregungskraft zu welcher Werkstückverformung führt. Dabei entspricht die innerhalb der beiden Kurvenzüge liegende Fläche der Energie, welche von dem Werkstück aufgenommen wird. Da die von den Kurven in Fig. 1b eingeschlossene Fläche in der Nähe der Resonanzfrequenz am größten ist, ist dieser Bereich auch am besten zur Übertragung von Energie in das Werkstück geeignet. Die zur Entspannung des Werkstücks verwendeten Frequenzen müssen aus denjenigen ausgewählt werden, die maximale Amplitudenwerte im Antwortverhalten während der Testphase aufweisen. Die jeweilige Amplitude läßt sich aus der gemessenen Beschleunigung mit Hilfe der folgenden Formel berechnen, in der $\hat{X}$ der Amplitude entspricht, â der gemessenen Beschleunigung und ω der Anregungsfrequenz:

$$\hat{X} = \frac{\hat{a}}{\omega^2}$$

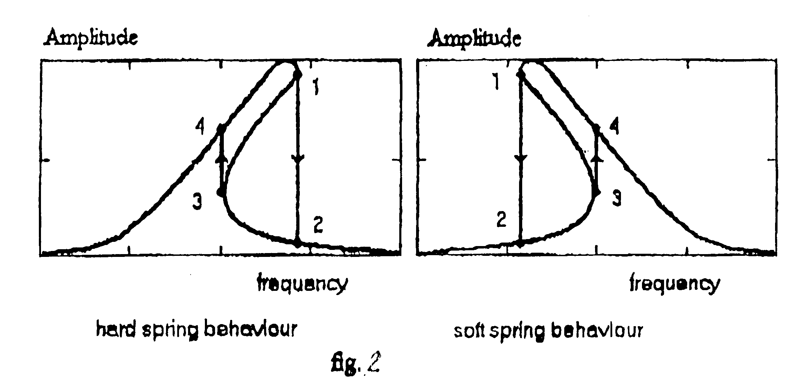

Es ist jedoch möglich, daß die mit Hilfe des gemessenen Kurvenverlaufs ermittelte Anregungsfrequenz aufgrund von Defekten, Materialfehlern oder mechanischen Resonanzfrequenzen einzelner Teile des Werkstücks zustandegekommen ist. Solche Resonanzen beruhen auf einem negativen Dämpfungsfaktor oder einer sich selbst erregenden Schwingung. Diese Frequenzen eignen sich nicht zur Entspannung des Werkstücks. Um eine solche Resonanz von einer Resonanz zu unterscheiden, die zur Entspannung des Werkstücks geeignet ist, wird die Veränderung der Schwingungsamplitude bei sich ändernder Anregungsfrequenz in der Testphase ausgewertet. In Fig. 2 ist dargestellt, wie sich ein hard-spring-Verhalten und ein soft-spring-Verhalten bei zu- und abnehmender Anregungsfrequenz unterscheiden. Ein hard-spring-Verhalten weisen diejenigen Resonanzen auf, die nicht zur Entspannung geeignet sind, wohingegen sich die zur Entspannung geeigneten Resonanzbereiche durch ein soft-spring-Verhalten auszeichnen. Beide Resonanzbereiche weisen charakteristische Amplitudensprünge auf, deren Lage und Größe je nach Verhalten unterschiedlich ist. Beim hard-spring-Verhalten erfolgt ein großer Amplitudensprung 1-2 von einer großen Amplitude 1 zu einer kleinen Amplitude 2 bei ansteigenden Anregungsfrequenzen bei einer Frequenz, die oberhalb der Mittenfrequenz liegt, und einen kleinen Amplitudensprung 3-4 von einer kleineren Amplitude 3 zu einer größeren Amplitude 4 bei absteigenden Anregungsfrequenzen bei einer Frequenz, unterhalb derjenigen des großen Amplitudensprungs, die in etwa der Mittenfrequenz entspricht. Bei einem soft-spring-Verhalten erfolgt bei ansteigenden Anregungsfrequenzen ein kleiner Amplitudensprung 3-4 von einer kleineren Amplitude 3 zu einer größeren Amplitude 4 bei einer mittleren Frequenz des Resonanzbereichs und ein großer Amplitudensprung 1-2 bei abnehmenden Frequenzen von einer großen Amplitude 1 zu einer kleinen Amplitude 2 bei einer Frequenz, die kleiner als die des kleinen Amplitudensprungs 3-4 ist.

Da sich ein hard-spring-Verhalten und soft-spring-Verhalten aufgrund der gemessenen Amplitudenwerte nicht immer eindeutig auseinanderhalten lassen, sollte aufgrund der negativen Auswirkungen eine Anregungsfrequenz mit hard-spring-Verhalten den Anregungsfrequenzen nur dann ein soft-spring-Verhalten zugewiesen werden, wenn diese ein soft-spring-Verhalten auch eindeutig aufweisen.

Nach Abschluß der Testphase und Auswertung des gemessenen Kurvenverlaufs bei jeweils ansteigenden und abnehmenden Anregungsfrequenzen (Microscanning) werden aus allen möglichen Resonanzbereichen bzw. Frequenzen nur diejenigen ausgewählt, mit denen wirklich eine Beseitigung der inneren Spannungen zu erreichen ist.

Anregungsfrequenzen, die ein hard-spring-Verhalten aufweisen, werden nicht zur Entspannung des Werkstücks verwendet. Mit diesen Frequenzen wird aber dennoch überprüft, ob die ausgewählten Anregungsfrequenzen, die ein soft-spring-Verhalten aufweisen, eventuell Harmonische oder Subharmonische der hard-spring-Frequenzen darstellen. Soft-Spring-Frequenzen, die ein ganzzahliges Vielfaches oder einen Teiler einer hard-spring-Frequenz darstellen, werden auch nicht zur Anregung während der Entspannungsphase verwendet.

Die ermitteln spektralen Antworten der Testphase werden weiter ausgewertet, um die Energieübertragungseffizienz zur Beseitigung von inneren Spannungen zu beurteilen. Diese Verarbeitung basiert auf dem Verhältnis zwischen der vom Werkstück aufgenommenen Energie und der zur Anregung in das Werkstück übertragenen Energie. Die von dem Vibrator in das Werkstück injizierte Energie kann aus der Leistung bestimmt werden, die während der Dauer einer Rotation verbraucht wird oder die - in einer anderen Ausführungsform - in der Leistung des vom Beschleunigungsmesser aufgenommenen Signals enthalten ist.

Die über die Dämpfung vom Werkstück aufgenommene Energie läßt sich über folgende Formel bestimmen:

$$\Delta W = \oint F \cdot dx$$

wobei $\Delta W$ die aufgenommene Energie darstellt und F(x) einer mathematischen Modellierung des Werkstücks entspricht. Die Genauigkeit des Ergebnisses hängt von der Genauigkeit der mathematischen Modellierung ab. Zur Modellierung eines nicht linear gedämpften Systems läßt sich die Gleichung von Duffing verwenden. Für eine nicht so gute aber sehr viel einfachere Berechnung lassen sich folgende Formeln verwenden:

$$\Delta W = \pi \cdot \omega \cdot c \cdot \hat{X}^2$$

wobei $\omega$ der Drehfrequenz, c dem Dämpfungskoeffizienten und $\hat{X}$ der Bewegungsamplitude entspricht. Die Energieeffizienz $\eta$ läßt sich dann nach folgender Formel berechnen:

$$\eta = \frac{\hat{a}^2}{\omega \cdot a_{RMS}^2}$$

wobei $a_{RMS}$ dem quadratischen Mittelwert der Beschleunigung, $\hat{a}$ dem Spitzenwert der Beschleunigung und $\eta$ der Energieeffizienz entspricht. Eine solche Berechnung läßt sich auch mit sehr einfachen, nicht digitalen Auswerteeinrichtungen durchführen.

Es ist bekannt, die Effizienz einer Entspannung mit Hilfe des Harmonic Distortion Factor zu bestimmen. Dieser Faktor wird nach folgender Formel berechnet:

$$HD = \frac{\sqrt{\sum_{i=2}^{n-1} F\{a[i]\}^2}}{F\{a[1]\}}$$

wobei F{a[i]} der Amplitude der Harmonischen i-ter Ordnung des Beschleunigungsspektrums entspricht. Die nach dieser Methode berechneten Effizienzfaktoren haben jedoch nur eine geringe Aussagekraft, da bei der Berechnung die von dem Vibrator in das Werkstück injizierte Energie nicht berücksichtigt wird. Entspannungseffizienzwerte, die nach diesem Verfahren berechnet werden, treffen eine Auswahl geeigneter Entspannungsfrequenzen nur aufgrund der Tatsache, daß ein größerer Anteil des höherfrequenten Spektralbereichs angeregt wird.

Ein besserer Ansatz zur Berechnung der Energieeffizienz ist es, THD-Werte (Total Harmonics Distortion) zu berechnen. Dieser Wert läßt sich für jede einzelne Anregung, d.h. für jede voreingestellte Drehzahlfrequenz nach folgender Formel berechnen:

$$THD = \frac{\sqrt{\sum_{i=2}^{n-1} F\{a[i]\}^2}}{\sqrt{\sum_{i=1}^{n-1} F\{a[i]\}^2}}$$

wobei THD den Effizienzwert angibt, F{a[i]} den spektralen Amplitudenwert bei der jeweils i-ten Harmonischen der Anregungsgrundfrequenz (i=1) und n die Gesamtzahl der für jede Anregung gemessene Frequenzen des Werkstücks. Mit den solchermaßen berechneten Effizienzwerten lassen sich sehr leicht die besten Vibrationsfrequenzen zur Entspannung finden, da alle berechneten THD-Werte kleiner als 1 sind. Zudem berücksichtigen THD-Werte den breiteren Anregungsfrequenzbereich bei Verwendung einer nicht sinusförmigen Anregungskraft.

Die THD-Werte werden für alle Anregungsdrehzahlwerte berechnet, die innerhalb eines bestimmten Bereichs um die Spitzenwerte des gemessenen Kurvenverlaufs liegen. Jeder THD-Wert gibt die Entspannungseffizienz an, die mit den jeweiligen Anregungsdrehzahlfrequenzen und der dadurch direkt oder über die Harmonischen injizierten Energie erreichbar ist. Die Bandbreite an Anregungsdrehzahlfrequenzen, innerhalb der für jede Frequenz ein THD-Wert berechnet wird, wird in Abhängigkeit von der Amplitude im gemessenen Kurvenverlauf bestimmt. Vorzugsweise reicht die Bandbreite bis zu solchen Amplitudenwerten im gemessenen Kurvenverlauf, bei denen die Amplitude im Vergleich zum Spitzenwert auf einen Wert zurückgegangen ist, der in etwa dem 0,7-fachen bzw. dem $1/\sqrt{2}$-fachen der Maximalamplitude entspricht. Für jede aus dem gemessenen Kurvenverlauf ermittelte Anregungsdrehzahlfrequenz läßt sich ein entsprechender Frequenzbereich bestimmen. Die mittleren THD-Werte, die für jeden dieser Frequenzbereiche berechnet werden, werden in absteigender Reihenfolge sortiert. Um den Berechnungsaufwand zu vereinfachen, ist es ebenso möglich, bloß diejenigen THD-Werte zu verwenden, welche den ermittelten Anregungsdrehzahlfrequenzen entsprechen. Die Liste der nach ihrer Größe sortierten THD-Werte wird anschließend daraufhin überprüft, ob eine Anregungsdrehzahlfrequenz eines THD-Wertes eine Harmonische oder Unter-Harmonische eines anderen darstellt. Entspricht eine der Anregungsfrequenzen einem ganzzahligen Vielfachen einer anderen, so wird nur diejenige weiter berücksichtigt, welcher der größere (mittlere) THD-Wert zugeordnet ist.

Ein THD-Wert gibt an, welche Fähigkeit eine Anregungsfrequenz besitzt, Schwingungen in einem zur Entspannung geeigneten Frequenzbereich in das Werkstück zu injizieren. THD-Werte werden deshalb im folgenden auch als Energie-Effizienzwerte bezeichnet.

Die Entspannung des Werkstücks wird anschließend nur mit den Frequenzen durchgeführt, welche die höchsten THD-Werte aufweisen, wobei die Reihenfolge der zur Entspannung verwendeten Frequenzen der ermittelten Reihenfolge entspricht.

Alle Operationen zum Betreiben einer Vibrationsmaschine für die Entspannung eines Werkstückes, insbesondere die Ermittlung geeigneter Anregungsfrequenzen, werden vorzugsweise mit Hilfe digitaler Rechenmaschinen ausgeführt.

Während eines Macroscanning-Durchlaufs in der Testphase wird, wie oben beschrieben, auch ein Microscanning durchgeführt. Dabei werden die Drehzahlwerte innerhalb jedes Microscanning-Drehzahlbereichs für jeden Macroscanning-Drehzahlwert mehrfach durchlaufen. In jeder der Durchlaufrichtungen, also jeweils in Richtung zunehmender und abnehmender Drehzahlwerte, wird für jeden gemessenen Amplitudenwert der Durchschnitt mehrerer Meßwerte gebildet. In der Praxis hat sich gezeigt, daß ein Amplitudenwertdiagramm, welches später zur Unterscheidung von hard- und softspring-Verhalten verwendet werden soll, aufgrund statistischer Meßwertschwankungen nicht auf einem einzigen, sondern der Überlagerung mehrerer gleichgerichteter Microscanning-Durchläufe gebildet werden sollte, um die Aussagekraft zu erhöhen.

Aus den so gemessenen Werten läßt sich noch ein weiteres Auswahlkriterium zur Bestimmung geeigneter Anregungsfrequenzen für die Entspannung des Werkstücks gewinnen. Voraussetzung dafür ist, daß, wie in der Praxis üblich, die Anregung in der Testphase mit derselben Amplitude durchgeführt wird, d.h. demselben Exzenter, wie in der anschließenden Entspannungsphase. Dazu wird in der Testphase die während der Microscanning-Durchläufe ermittelte Resonanzamplitude und deren Varianz bestimmt. Es ist dabei insbesondere von Interesse, ob sich die Resonanzamplitude während des Microscannings verändert. Eine Änderung der Resonanzamplitude gibt an, welche Fähigkeit die jeweilige Anregungsfrequenz für einen schnellen Abbau von inneren Spannungen besitzt. Anregungsfrequenzen, die während der Microscanningdurchläufe der Testphase schon zu Änderungen in der Resonanzamplitude führen, sind für eine schnelle Entspannung besonders geeignet. Es läßt sich jeder Resonanzfrequenz ein Varianzwert zuordnen. Aufgrund des ermittelten Varianzwertes für jede Resonanzfrequenz läßt sich eine Rangliste der Resonanzfrequenzen bestimmen, wobei sich die Frequenzen mit besonders hohen Varianzwerten besonders gut für einen schnellen Abbau innerer Spannungen eignen.

Gemäß dem vorstehend beschriebenen Verfahren läßt sich zu jedem ausgewählten Drehzahlwert (mit Maximalwerten der Schwingungsamplitude) sowohl ein Energieeffizienzwert (THD-Wert) als auch ein Änderungseffizienzwert bestimmen. Jeder dieser Werte gibt die für jede Frequenz individuellen Eigenschaften für eines der beiden Qualitätskriterien an. Ein Gesamtqualitätskriterium ergibt sich jedoch erst aus der Kombination beider Einzelkriterien. D.h., nur Drehzahlwerte, die gemäß beider Kriterien eine hohe Effizienz aufweisen, sind zur Entspannung besonders gut geeignet. Um dementsprechend einen allgemeinen Effizienzwert angeben zu können, müssen beide Effizienzwerte in sich gegenseitig verstärkender Weise miteinander verknüpft werden. Das bedeutet, daß eine Erhöhung eines der beiden Effizienzwerte auch zu einer entsprechenden Erhöhung eines gemeinsamen Effizienzwertes führen muß. Geeignete Verknüpfungen sind daher beispielsweise eine Multiplikation oder eine Addition. Ein geeigneter gemeinsamer Effizienzwert, der zur Auswahl von den Entspannungsfrequenzen geeignet ist, ließe sich beispielsweise nach folgender Formel berechnen:

$$E = THD \cdot \frac{\sigma}{m}$$

wobei:

E - gemessener Effizienzwert,
THD - berechneter Energieeffizienzwert,
$\sigma$ - Varianzwert.
m - Resonanzamplitude,
$\frac{\sigma}{m}$ Änderungseffizient.

Bei der Vibration zur Entspannung des Werkstücks durchläuft die Anregungsfrequenz einen dem jeweiligen Spitzenwert zugeordneten Frequenzbereich. Die Bandbreite dieses Frequenzbereiches entspricht vorzugsweise derjenigen, die zur Berechnung des mittleren Effizienzwertes verwendet wird. So wird das Werkstück nicht nur mit einer speziellen Frequenz angeregt, sondern auch bei beabsichtigter konstanter Drehzahlgeschwindigkeit wird ein Frequenzbereich um die mittlere Winkelgeschwindigkeit durchlaufen. Auf diese Weise wird das Werkstück mit einem sehr viel breiteren Frequenzspektrum angeregt. Zur Anregung verwendet man bevorzugt exzentrische Vibratoren, die in der Lage sind, mehr Energie in das Werkstück zu injizieren. Ein kontinuierliches Durchlaufen von Frequenzen um die ausgewählte Resonanzfrequenz führt zu einer Verbreiterung des injizierten Spektrums sowohl bei einer sinusförmigen als auch bei einer nicht sinusförmigen, beispielsweise rechteckförmigen Anregung. Durch Auswahl der Art der Anregung läßt sich das injizierte Spektrum präzise bestimmen.

Um die Entspannung eines Werkstücks zu beschleunigen, ist es auch möglich, zwei Vibratoren gleichzeitig einzusetzen. Dabei können diese Vibratoren entweder mit gleicher Anregungsfrequenz betrieben werden, um damit die injizierte Energie zu erhöhen, oder mit (leicht) unterschiedlichen Frequenzen.

Zusammenfassend läßt sich festhalten, daß das beschriebene Verfahren zum Betreiben einer Vibrationsmaschine für die Entspannung eines Werkstücks die folgenden Arbeitsschritte enthält. Zunächst wird das Werkstück in einer Testphase mit einer nicht sinusförmigen Anregungskraft in Schwingung versetzt, wobei die Anregungsfrequenz um einen Mittelwert schwankt. Gleichzeitig wird das Schwingungsverhalten des Werkstücks gemessen und ausgewertet. Diejenigen Anregungsfrequenzen, bei denen das Werkstück Spitzenwerte im gemessenen Schwingungsverhalten aufweist, sind grundsätzlich für eine Anregung zur Entspannung des Werkstücks geeignet. Jedoch muß in einem nächsten Schritt unterschieden werden, welche dieser Frequenzen in der Lage sind, einen wirklichen Abbau innerer Spannung zu bewirken. Dazu wird das gemessene Schwingungsverhalten im Bereich der ausgewählten Anregungsfrequenzen ($f_1...f_n$) bei ansteigenden und abnehmenden Frequenzwerten ausgewertet, um ein soft-spring-Verhalten von einem hard-spring-Verhalten unterscheiden zu können. Für die verbleibenden Frequenzwerte, die ein soft-spring-Verhalten aufweisen, werden innerhalb eines ausgewählten Bereichs um die Spitzenwerte des gemessenen Kurvenverlaufs Effizienzwerte (THD) für die Effizienz der Übertragung von Energie in den interessierenden Frequenzbereich bei der jeweiligen Anregungsfrequenz ermittelt. Für jeden der nach der Unterscheidung zwischen hard-spring-Verhalten und soft-spring-Verhalten verbliebenen Anregungsfrequenzwerte wird ein mittlerer Effizienzwert aufgrund des jeweils untersuchten Frequenzbereichs ermittelt. Somit wird jedem der möglichen Anregungsfrequenzwerte ein Effizienzwert zugeordnet. Gleichzeitig wird ein Änderungseffizienzwert ermittelt, der angibt, welche Fähigkeit eine Anregungsfrequenz zum schnellen Abbau von inneren Spannungen besitzt. Anschließend wird aus beiden Effizienzwerten für jede der Anregungsfrequenzen ein neuer, gemeinsamer Effizienzwert bestimmt.

Anschließend wird eine Tabelle gebildet, in welcher die gemeinsamen Effizienzwerte ihrer Größe nach geordnet werden. In einer weiteren Spalte der Tabelle werden die jedem Effizienzwert entsprechenden Anregungsfrequenzen eingetragen. Auf diese Weise wird eine Rangliste geeigneter Anregungsfrequenzen erzeugt, in welcher die Anregungsfrequenzen so angeordnet sind, daß die Anregungsfrequenzen am Beginn dieser Rangliste am besten zur Anregung von Frequenzen geeignet sind, welche im mikroskopischen Bereich des Werkstücks zu einem Abbau von inneren Spannungen führen. In einem nächsten Schritt werden diejenigen Frequenzen herausgesucht, die ein ganzzahliges Vielfaches einer anderen Anregungsfrequenz dieser Rangliste darstellen. Von diesen Frequenzen verbleibt jeweils nur diejenige in der Rangliste, die einen höheren Effizienzwert aufweist.

Zur Anregung des Werkstücks für die Entspannung innerer Spannungen werden die Frequenzen mit den höchsten Effizienzwerten verwendet. Bei der Vibration des Werkstücks wird vorzugsweise eine nicht sinusförmige periodische Kraft zur Anwendung verwendet und zusätzlich wird die Anregungsfrequenz um einen mittleren Wert variiert, um so unter anderem auch Änderungen der idealen Anregungsfrequenz aufgrund eines zunehmenden Abbaus innerer Spannungen zu berücksichtigen. Idealerweise wird auch während der Entspannungsphase das Schwingungsverhalten des Werkstücks gemessen. Die Auswertung des Schwingungsverhaltens erlaubt, den Entspannungsvorgang mit einer bestimmten Anregungsfrequenz abzubrechen, sobald die Auswertung des gemessenen Schwingungsverhaltens ergibt, daß ein vorgegebener Entspannungswert erreicht wurde.

In den meisten Fällen genügt es, die Entspannung des Werkstücks auf diejenigen drei Frequenzen zu beschränken, die zu den höchsten THD-Werten bzw. Effizienzwerten führen. Es kann vorkommen, daß der vierte Effizienz-Wert sich nur unwesentlich vom dritten unterscheidet. In diesem Fall sollte das Werkstück vorsichtshalber auch noch auf der dem vierten THD-Wert zugeordneten Frequenz entspannt werden. Auch diese Betrachtung läßt sich sehr einfach in einer durch einen Rechner handhabbaren Weise automatisch durchführen, indem von den drei ersten Effizienz-Werten das quadratische Mittel gebildet wird und mit dem vierten Effizienz-Wert verglichen wird. Liegt der vierte Effizienz-Wert unter einem vorgegebenenen Prozentsatz von beispielsweise 50 % dieses quadratischen Mittels, kann die Auswahl auf die ersten drei Frequenzen beschränkt werden. Liegt dagegen der vierte Effizienz-Wert über diesem Schwellwert, sollte die vierte Frequenz noch hinzugenommen weden. Diese Berechnung kann nun auf die wertemäßig folgenden EffizienzWerte erweitert werden, bis das angegebene Schwellwertkriterium erfüllt ist.

Wenn eine Entspannung mit den ersten 3 ausgewählten Anregungsfrequenzen durchgeführt wurde, empfiehlt es sich, erneut Testläufe durchzuführen und eine Tabelle mit den entsprechenden Effizienz-Werten erneut aufzubauen. Aus den Differenzen der Einträge in der alten und in der neuen Tabelle lassen sich Rückschlüsse auf die bereits erfolgte Entspannung ziehen. Außerdem erhält man aus der nun erstellten Tabelle 3 neue Anregungsfrequenzen, die man für einen neuen Durchlauf benutzen kann, um die Entspannung noch weiter zu optimieren. Wenn die Tabellenwerte von 2 aufeinanderfolgenden Tabellen nicht mehr wesentlich voneinander abweichen, kann man davon ausgehen, daß das Werkstück ausreichend entspannt ist und das Verfahren abgebrochen werden kann.

**Patentansprüche**

1. Verfahren zum Betreiben einer Maschine für die Entspannung von Werkstücken, bei dem das Werkstück Vibrationen ausgewählter Drehzahlwerte eines Vibrators unterworfen wird und bei dem die Auswahl der Drehzahlwerte des Vibrators aus einer Messung entnommen wird, welche das Schwingverhalten des Werkstücks bei Anregung durch den Vibrator in einem begrenzten Arbeitsbereich während einer Testphase wiedergibt, wobei aus dem gemessenen Kurvenverlauf diejenigen Drehzahlwerte ausgewählt werden, die zu Maximalwerten der Schwingungsamplitude führen,
**dadurch gekennzeichnet,**

daß für jeden der ausgewählten Drehzahlwerte ($f_1 \ldots f_n$) ein Energie-Effizienzwert nach folgender Formel bestimmt wird:

$$THD = \frac{\sqrt{\sum_{i=2}^{n-1} F\{a[i]\}^2}}{\sqrt{\sum_{i=1}^{n-1} F\{a[i]\}^2}}$$

wobei

THD - berechneter Energie-Effizienzwert,

F{a[i]} - spektraler Amplitudenwert bei der jeweils i-ten Oberwelle der Anregungsgrundfrequenz (i = 1),

n - Gesamtzahl der für jede Anregung gemessenen Frequenzen des Werkstücks,

daß die ausgewählten Drehzahlwerte ($f_1 \ldots f_n$) mit den zugehörigen Effizienzwerten korreliert werden und

daß über diese Korrelation aus den bereits ausgewählten Drehzahlwerten ($f_1 \ldots f_n$) eine weitere Auswahl getroffen wird, indem diejenigen ausgewählten Drehzahlwerte ($f_1 \ldots f_n$) mit den höchsten zugehörigen Effizienzwerten für die anschließende Entspannung des Werkstücks herangezogen werden.

**2.** Verfahren nach Anspruch 1, **dadurch gekennzeichnet,** daß von zwei ausgewählten Drehzahlwerten, von denen der eine ein ganzzahliges Vielfaches des anderen darstellt, nur derjenige zur Entspannung des Werkstücks verwendet wird, dem der höhere Effizienzwert zugeordnet ist.

**3.** Verfahren nach Anspruch 1 oder 2, **dadurch gekennzeichnet,** daß jedem der aufgrund des gemessenen Kurvenverlaufs ausgewählten Drehzahlwerte ein mittlerer Energie-Effizienzwert zugeordnet wird, der aus allen in einem bestimmten Bereich um den ausgewählten Drehzahlwert liegenden Drehzahlwerten bestimmt wird, wobei der Bereich jeweils durch einen oberen und einen unteren Drehzahlwert begrenzt wird, deren Schwingungsamplitude in dem gemessenen Kurvenverlauf um einen bestimmten Wert unterhalb des jeweiligen Maximalwertes liegt, vorzugsweise ist deren Amplitude im gemessenen Kurvenverlauf um den Faktor $1/\sqrt{2}$ kleiner als der Maximalwert.

**4.** Verfahren nach einem der Ansprüche 1 bis 3, **dadurch gekennzeichnet,** daß die zur Entspannung des Werkstücks ausgewählten Drehzahlwerte in der Entspannungsphase innerhalb eines bestimmten Bereichs um den ausgewählten Drehzahlwert herum variiert werden, wobei der Bereich durch einen oberen und einen unteren Drehzahlwert begrenzt ist, deren Schwingungsamplitude in dem gemessenen Kurvenverlauf um einen bestimmten Wert unterhalb des jeweiligen Maximalwertes liegt, vorzugsweise ist deren Amplitude im gemessenen Kurvenverlauf um den Faktor $1/\sqrt{2}$ kleiner als der Maximalwert.

**5.** Verfahren nach einem der Ansprüche 1 bis 4, **dadurch gekennzeichnet,** daß die Drehzahlwerte in der Testphase kontinuierlich oder in kleinen Schritten innerhalb eines festgelegten Bereichs um die jeweilige Anregungsdrehzahl herum variiert werden, wobei der Variationsbereich etwa 1 % des verwendeten Arbeitsbereichs beträgt.

**6.** Verfahren nach Anspruch 5, **dadurch gekennzeichnet,** daß die Variation der Anregungsdrehzahl während der Testphase um die jeweilige Anregungsdrehzahl mehrfach durchgeführt wird, und

daß jeweils getrennt in Richtung ansteigender und abnehmender Anregungsdrehzahlen für jede Anregungsdrehzahl der Durchschnitt der gemessenen Amplitudenwerte gebildet wird.

**7.** Verfahren nach Anspruch 6, **dadurch gekennzeichnet**, daß

in der Testphase für jeden Maximalwert ($f_1...f_n$)

die Varianz der Resonanzamplitude Varianzänderung ermittelt wird,

aus der für jeden Maximalwert ($f_1...f_n$) ermittelten Varianz ein Änderungs-Effizienzwert bestimmt wird, indem der Quotient aus der Varianz und der Resonanzamplitude gebildet wird, und

aus dem Energie-Effizienzwert (THD) und dem Änderungs-Effizienzwert ein gemeinsamer Effizienzwert gebildet wird, der sowohl die Energieeffizienz als auch die Fähigkeit eines Drehzahlwertes zu einem schnellen Abbau von inneren Spannungen miteinander verbindet, indem für jeden Maximalwert jeweils beide Werte in sich gegenseitig verstärkender Weise miteinander verknüpft werden.

**8.** Verfahren nach Anspruch 7, **dadurch gekennzeichnet,** daß der Energie-Effizienzwert (THD) und der Änderungs-Effizienzwert durch Multiplikation miteinander verknüpft werden, gemäß folgender Formel:

$$E = THD \cdot \frac{\sigma}{m}$$

wobei:

| | |
|---|---|
| E - | gemessener Effizienzwert, |
| THD - | berechneter Energieeffizienzwert, |
| σ - | Varianzwert. |
| m - | Resonanzamplitude, |
| $\frac{\sigma}{m}$ - | Änderungseffizient. |

**9.** Verfahren nach einem der Ansprüche 1 bis 8, **dadurch gekennzeichnet,** daß das Werkstück in der Testphase mit einer nicht-sinusförmigen periodischen Kraft angeregt wird.

**10.** Verfahren nach einem der Ansprüche 5 bis 9, **dadurch gekennzeichnet,** daß der beim Microscanning gemessene Kurvenverlauf im Bereich der zur Entspannung des Werkstücks ausgewählten Drehzahlwerte ausgewertet wird, um zu entscheiden, ob das Werkstück in den jeweiligen Drehzahlbereichen ein "soft-spring"-Verhalten oder ein "hard-spring"-Verhalten aufweist; und diejenigen Drehzahlwerte bzw. Drehzahlbereiche nicht zur Entspannung des Werkstücks verwendet werden, die ein "hard-spring"-Verhalten aufweisen.

**11.** Verfahren nach Anspruch 8, **dadurch gekennzeichnet,** daß auch diejenigen Drehzahlwerte bzw. Drehzahlbereiche, die ein "soft-spring"-Verhalten aufweisen, nicht zur Entspannung des Werkstücks verwendet werden, wenn der Drehzahlwert ein ganzzahliges Vielfaches oder einen Teiler eines anderen Drehzahlwertes mit einem "hard-spring"-Verhalten darstellt.

12. Verfahren nach Anspruch 10 oder 11, **dadurch gekennzeichnet,** daß zur Unterscheidung eines soft-spring-Verhaltens und eines hard-spring-Verhaltens des Werkstücks das Auftreten von Amplitudensprüngen bei zunehmenden und abnehmenden Drehzahl frequenzen untersucht wird, wobei bei Auftreten eines kleinen Amplitudensprungs (3, 4) zu einer höheren Amplitude bei abnehmenden Drehzahlfrequenzen und eines großen Amplitudensprungs (1, 2) zu einer kleinen Amplitude bei ansteigenden Drehzahlfrequenzen ein hard-spring-Verhalten vorliegt und bei Auftreten eines großen Amplitudensprungs (1, 2) zu einer kleinen Amplitude bei abnehmenden Drehzahlfrequenzen und eines kleinen Amplitudensprungs (3, 4) zu einer höheren Amplitude bei ansteigenden Drehzahlfrequenzen ein soft-spring-Verhalten vorliegt.

13. Verfahren nach einem der Ansprüche 10 bis 12, **dadurch gekennzeichnet,** daß zur Unterscheidung eines soft-spring-Verhaltens und eines hard-spring-Verhaltens des Werkstücks die Drehzahlwerte von Amplitudensprüngen bei zu- und abnehmenden Drehzahlfrequenzen ausgewertet werden, wobei zunächst jeweils der Drehzahlwert eines kleinen Amplitudensprungs (3, 4) und eines großen Amplitudensprungs (1, 2) ermittelt wird und anschließend untersucht wird, ob der größere Amplitudensprung (1, 2) bei einer Drehzahlfrequenz erfolgt, die oberhalb derjenigen des kleinen Amplitudensprungs (3, 4) liegt, und somit ein hard-spring-Verhalten vorliegt, oder, ob der größere Amplitudensprung (1, 2) bei einer Drehzahlfrequenz erfolgt, die unterhalb derjenigen des kleinen Amplitudensprungs (3, 4) liegt, und somit ein soft-spring-Verhalten vorliegt.

14. Verfahren nach einem der Ansprüche 10 bis 13, **dadurch gekennzeichnet,** daß einem Drehzahlwert bzw. Drehzahlbereich ein "hard-spring"-Verhalten zugeordnet wird, wenn dem Drehzahlwert bzw. Drehzahlbereich ein "soft-spring"-Verhalten nicht mit Sicherheit zugeordnet werden kann.

15. Verfahren nach einem der Ansprüche 1 bis 14, **dadurch gekennzeichnet,** daß das Werkstück zur Entspannung mit einer nicht-sinusförmigen periodischen Kraft angeregt wird.

16. Verfahren nach einem der Ansprüche 1 bis 15, **dadurch gekennzeichnet,** daß zur Entspannung des Werkstücks mit den ausgewählten Drehzahlwerten zwei Vibratoren gleichzeitig eingesetzt werden, die bevorzugt mit zwei leicht verschiedenen Anregungsdrehzahlen arbeiten.

17. Verfahren nach einem der Ansprüche 1 bis 16, **dadurch gekennzeichnet,** daß während der Entspannungsphase das Schwingungsverhalten des Werkstücks gemessen und ausgewertet wird, um das Werkstück nur so lange in Schwingung zu versetzen, wie es zur Erreichung eines vorbestimmten Grades der Entspannung des Werkstücks notwendig ist, wobei eine Entspannung mit einer der ausgewählten Drehzahlfrequenzen abgebrochen wird, sobald das gemessene Schwingungsverhalten im Bereich der jeweils verwendeten Drehzahlfrequenz (en) einen vorbestimmten Grad an Symmetrie und/oder ein vorbestimmtes Verhältnis des gemessenen Amplitudenspitzenwertes zu den benachbarten Amplitudenwerten (Grad der Flachheit) erreicht hat.

**Claims**

1. A method of operating a machine for stress relieving workpieces, comprising the steps of subjecting the workpiece to vibrations of selected revolution values of a vibrator and making the selection of the revolution values of the vibrator on the basis of a measurement revealing the vibration behaviour of the workpiece in a limited operating range during a test phase when said workpiece is excited by the vibrator, the measured curve being used for selecting therefrom the revolution values resulting in maximum values of the vibration amplitude,
**characterized in**

that an energy efficiency value is determined for each of the selected revolution values ($f_1$ ... $f_n$) in accordance with the following formula:

$$THD = \frac{\sqrt{\sum_{i=2}^{n-1} F\{a[i]\}^2}}{\sqrt{\sum_{i=1}^{n-1} F\{a[i]\}^2}}$$

wherein

TDH - stands for the energy efficiency value calculated,

F{a[i]} - stands for the spectral amplitude value of the respective $i^{th}$ harmonic of the basic excitation frequency (i = 1),

n - stands for the total number of the frequencies of the workpiece measured for each excitation,

that the selected revolution values ($f_1$ ... $f_n$) are correlated with the associated efficiency values, and

that, via this correlation, a further selection is made from the revolution values ($f_1$ ... $f_n$) that have already been selected, said further selection being made by using the selected revolution values ($f_1$ ... $f_n$) having associated therewith the highest efficiency values for the subsequent stress relief of the workpiece.

2. A method according to claim 1, **characterized in that,** when there are two selected revolution values and when one of said revolution values is an integer multiple of the other one, only the revolution value having associated therewith the higher efficiency value will be used for stress relieving the workpiece.

3. A method according to claim 1 or 2, **characterized in that** each of the revolution values selected on the basis of the measured curve has associated therewith a mean energy efficiency value which is determined on the basis of all the revolution values comprised in a specific range around the selected revolution value, said range being limited by respective upper and lower revolution values and the vibration amplitudes of said upper and lower revolution values in the measured curve being smaller than the respective maximum value by a specific value, said amplitudes of the upper and lower revolution values in the measured curve being preferably smaller than the respective maximum value by a factor of $1/\sqrt{2}$.

4. A method according to one of the claims 1 to 3, **characterized in that** the revolution values selected for stress relieving the workpiece are varied in the stress relief phase within a specific range around the selected revolution value, said range being limited by respective upper and lower revolution values and the vibration amplitudes of said upper and lower revolution values in the measured curve being smaller than the respective maximum value by a specific value, said amplitudes of the upper and lower revolution values in the measured curve being preferably smaller than the respective maximum value by a factor of $1/\sqrt{2}$.

5. A method according to one of the claims 1 to 4, **characterized in that** the revolution values are varied in the test phase within a predetermined range around the respective number of excitation revolutions continuously or in small steps, the variation range being approx. 1 % of the operating range used.

6. A method according to claim 5, **characterized in**

that the variation of the number of excitation revolutions around the respective number of excitation revolutions during the test phase is carried out several times, and

that the average of the measured amplitude values is formed for each number of excitation revolutions separately in the direction of increasing and decreasing numbers of excitation= revolutions.

7. A method according to claim 6, **characterized in**

that, in the test phase, the variance of the resonant amplitude is determined for each maximum value ($f_1$ ... $f_n$),

that a variation efficiency value is determined on the basis of the vriance ascertained for each maximum value ($f_1$ ... $f_n$), said variation efficiency value being determined by forming the quotient of the variance and the resonant amplitude, and

that a common efficiency value is formed on the basis of the energy efficiency value (THD) and the variation efficiency value, said common efficiency value combining the energy efficiency as well as the extent to which a revolution value is capable of rapily reducing internal stresses, and said combination being effected by connecting for each maximum value these two values in a mutually enhancing manner.

8. A method according to claim 7, **characterized in that** the energy efficiency value (THD) and the variation efficiency value are connected by multiplication according to the following formula:

$$E = THD \cdot \frac{\sigma}{m}$$

wherein:

E - is the measured efficiency value,
THD - is the calculated energy efficiency value,
$\sigma$ - is the variance value,
m - is the resonant amplitude
$\frac{\sigma}{m}$ - is the variation efficiency value.

9. A method according to one of the claims 1 to 8, **characterized in that** the workpiece is excited by a non-sinusoidal periodic force in the test phase.

10. A method according to one of the claims 5 to 9, **characterized in that** the curve measured during microscanning is evaluated in the range of the revolution values selected for stress relieving the workpiece so as to decide whether the workpiece exhibits a soft spring behaviour or a hard spring behaviour in the respective revolution ranges; and

that the revolution values or revolution ranges exhibiting a hard spring behaviour are not used for stress relieving the workpiece.

11. A method according to claim 8, **characterized in that,** if the respective revolution value exhibiting a soft spring behaviour is an integer multiple or a divisor of some other revolution value exhibiting a hard spring behaviour, said revolution values or revolution ranges exhibiting a soft spring behaviour are not used for stress relieving the workpiece either.

12. A method according to claim 10 or 11, **characterized in that,** for differentiating between a soft spring behaviour and a hard spring behaviour of the workpiece, the occurrence of amplitude jumps in the case of increasing and decreasing revolution frequencies is examined, the occurrence of a small amplitude jump (3, 4) towards a higher amplitude in the case of decreasing revolution frequencies and of a big amplitude jump (1, 2) towards a smaller amplitude in the case of increasing revolution frequencies being indicative of a hard spring behaviour, and the occurrence of a big amplitude jump (1, 2) towards a smaller amplitude in the case of decreasing revolution frequencies and of a small amplitude jump (3, 4) towards a higher amplitude in the case of increasing revolution frequencies being indicative of a soft spring behaviour.

13. A method according to one of the claims 10 to 12, **characterized in that,** for differentiating between a soft spring behaviour and a hard spring behaviour of the workpiece, the revolution values of amplitude jumps in the case of increasing and decreasing revolution frequencies are evaluated, the respective revolution value of a small amplitude jump (3, 4) and of a big amplitude jump (1, 2) being first determined whereupon it is examined whether the bigger amplitude jump (1, 2) takes place at a revolution frequency lying above that of the smaller amplitude jump (3, 4), which means that a hard spring behaviour exists, or whether the bigger amplitude jump (1, 2) takes place at a revolution frequency lying below that of the smaller amplitude jump (3, 4), which means that a soft spring behaviour exists.

14. A method according to one of the claims 10 to 13, **characterized in that** a revolution value or a revolution range has assigned thereto a hard spring behaviour if a soft spring behaviour cannot be assigned to said revolution value or revolution range with certainty.

15. A method according to one of the claims 1 to 14, **characterized in that** the workpiece is excited with a non-sinusoidal periodic force for stress relief.

16. A method according to one of the claims 1 to 15, **characterized in that** two vibrators are used simultaneously for stress relieving the workpiece with the selected revolution values, said vibrators operating preferably with two slightly different numbers of excitation revolutions.

17. A method according to one of the claims 1 to 16, **characterized in that**, during the stress relief phase, the vibration behaviour of the workpiece is measured and evaluated so as to cause the workpiece to vibrate only as long as this is necessary for achieving a predetermined degree of stress relief of said workpiece, a stress relief with one of the selected revolution frequencies being discontinued as soon as the measured vibration behaviour has reached a predetermined degree of symmetry and/ or a predetermined ratio of the measured amplitude peak value to the neighbouring amplitude values (degree of flatness) in the range of the respective revolution frequency (revolution frequencies) used.

**Revendications**

1. Procédé pour exploiter une machine de relaxation de pièces, dans lequel la pièce est soumise à des vibrations de valeurs de vitesse de rotation sélectionnées d'un vibrateur et dans lequel le choix des valeurs de vitesse de rotation du vibrateur résulte d'une mesure qui reproduit le comportement de vibration de la pièce lors d'une excitation par le vibrateur dans une plage de travail limitée pendant une phase de test, les valeurs de vitesse de rotation qui produisent des valeurs maximales de l'amplitude de vibration étant sélectionnées dans la courbe mesurée,
**caractérisé** par le fait
que pour chacune des valeurs de vitesse de rotation ($f_1 \ldots f_n$) sélectionnées, on détermine une valeur d'efficacité d'énergie d'après la formule suivante :

$$THD = \frac{\sqrt{\sum_{i=2}^{n-1} F\{a[i]\}^2}}{\sqrt{\sum_{i=1}^{n-1} F\{a[i]\}^2}}$$

où

THD est la valeur d'efficacité d'énergie calculée,
F{a[i]} est la valeur d'amplitude spectrale pour l'harmonique d'ordre i de la fréquence de base d'excitation (i = 1),
n est le nombre total des fréquences de la pièce mesurées pour chaque excitation,
que les valeurs de vitesse de rotation ($f_1$ ... $f_n$) sélectionnées sont corrélées avec les valeurs d'efficacité associées, et
que par l'intermédiaire de cette corrélation on fait un choix supplémentaire parmi les valeurs de vitesse de rotation ($f_1$ ... $f_n$) déjà sélectionnées dans la mesure où on utilise pour la relaxation ultérieure de la pièce les valeurs de vitesse de rotation ($f_1$ ... $f_n$) sélectionnées auxquelles sont associées les valeurs d'efficacité les plus élevées.

2. Procédé selon la revendication 1, **caractérisé** par le fait que parmi deux valeurs de vitesse de rotation sélectionnées, dont l'une est un multiple entier de l'autre, on utilise pour la relaxation de la pièce uniquement celle à laquelle est associée la valeur d'efficacité la plus élevée.

3. Procédé selon la revendication 1 ou 2, **caractérisé** par le fait qu'on associe à chacune des valeurs de vitesse de rotation sélectionnées dans la courbe mesurée, une valeur moyenne d'efficacité d'énergie qui est déterminée à partir de toutes les valeurs de vitesse de rotation situées dans une plage définie autour de la valeur de vitesse de rotation sélectionnée, la plage étant chaque fois limitée par une valeur de vitesse de rotation supérieure et par une valeur de vitesse de rotation inférieure dont l'amplitude de vibration est dans la courbe mesurée inférieure d'une valeur définie à la valeur maximale, l'amplitude étant de préférence dans la courbe mesurée inférieure du facteur $1/\sqrt{2}$ à la valeur maximale.

4. Procédé selon une des revendications 1 à 3, **caractérisé** par le fait que pendant la phase de relaxation, on fait varier les valeurs de vitesse de rotation sélectionnées pour la relaxation de la pièce à l'intérieur d'une plage définie autour de la valeur de vitesse de rotation sélectionnée, la plage étant limitée par une valeur de vitesse de rotation supérieure et par une valeur de vitesse de rotation inférieure dont l'amplitude de vibration est dans la courbe mesurée inférieure d'une valeur déterminée à la valeur maximale, l'amplitude étant de préférence dans la courbe mesurée inférieure du facteur $1/\sqrt{2}$ à la valeur maximale.

5. Procédé selon une des revendications 1 à 4, **caractérisé** en ce que pendant la phase de test, on fait varier les valeurs de vitesse de rotation de manière continue ou par petits pas à l'intérieur d'une plage déterminée autour de la vitesse de rotation d'excitation, la plage de variation représentant environ 1% de la plage de travail utilisée.

6. Procédé selon la revendication 5, **caractérisé** par le fait que pendant la phase de test, on fait varier plusieurs fois la vitesse de rotation d'excitation autour de la vitesse de rotation d'excitation considérée et que l'on forme la moyenne des valeurs d'amplitude mesurées pour chaque vitesse de rotation d'excitation, séparément en direction de vitesses de rotation d'excitation croissantes et de vitesses de rotation d'excitation décroissantes.

7. Procédé selon la revendication 6, **caractérisé** par le fait que pendant la phase de test, on détermine pour chaque valeur maximale ($f_1$ ... $f_n$) la variance de l'amplitude de résonance, la variation de la variance, et on détermine, à partir de la variance déterminée pour chaque valeur maximale ($f_1$ ... $f_n$), une valeur d'efficacité de variation en formant le quotient de la variance et de l'amplitude de résonance, et on forme, à partir de la valeur d'efficacité d'énergie (THD) et de la valeur d'efficacité de variation, une valeur d'efficacité commune qui associe aussi bien l'efficacité d'énergie que la capacité d'une valeur de vitesse de rotation à supprimer rapidement des tensions internes dans la mesure où, pour chaque valeur maximale, les deux valeurs sont combinées entre elles de façon à s'amplifier mutuellement.

8. Procédé selon la revendication 7, **caractérisé** par le fait que la valeur d'efficacité d'énergie (THD) et la valeur d'efficacité de variation sont combinées entre elles par multiplication suivant la formule suivante :

$$E = THD \cdot \frac{\sigma}{m}$$

où :

E est la valeur d'efficacité mesurée,
THD est la valeur d'efficacité d'énergie calculée,
$\sigma$ est la variance
m est l'amplitude de résonance, et
$\frac{\sigma}{m}$ est l'efficacité de variation.

9. Procédé selon une des revendications 1 à 8, **caractérisé** par le fait que la pièce est excitée pendant la phase de test avec une force périodique non sinusoïdale.

10. Procédé selon une des revendications 5 à 9, **caractérisé** en ce que la courbe mesurée lors du microscanning est analysée dans la zone des valeurs de vitesse de rotation sélectionnées pour la relaxation de la pièce afin de déterminer si la pièce présente un comportement "soft-spring" (rappel doux) ou "hard-spring" (rappel dur) dans les plages de vitesse de rotation considérées, et on n'utilise pas pour la relaxation de la pièce les valeurs ou plages de vitesse de rotation qui présentent un comportement "hard-spring".

11. Procédé selon la revendication 8, **caractérisé** par le fait que les valeurs ou plages de vitesse de rotation qui présentent un comportement "soft-spring" ne sont pas non plus utilisées pour la relaxation de la pièce lorsque la valeur de vitesse de rotation est un multiple entier ou un diviseur d'une autre valeur de vitesse de rotation présentant un comportement "hard-spring".

12. Procédé selon la revendication 10 ou 11, **caractérisé** par le fait que pour distinguer un comportement "soft-spring" et un comportement "hard-spring" de la pièce, on examine l'apparition de sauts d'amplitude pour des fréquences de vitesse de rotation croissantes et décroissantes, un comportement "hard-spring" existant lors de l'apparition d'un petit saut d'amplitude (3, 4) vers une amplitude plus grande pour des fréquences de vitesse de rotation décroissantes et d'un grand saut d'amplitude (1, 2) vers une petite amplitude pour des fréquences de vitesse de rotation croissantes, et un comportement "soft-spring" existant lors de l'apparition d'un grand saut d'amplitude (1, 2) vers une petite amplitude pour des fréquences de vitesse de rotation décroissantes et d'un petit saut d'amplitude (3, 4) vers une plus grande amplitude pour des fréquences de vitesse de rotation croissantes.

13. Procédé selon une des revendications 10 à 12, **caractérisé** par le fait que pour distinguer un comportement "soft-spring" et un comportement "hard-spring" d'une pièce, on analyse les valeurs de vitesse de rotation de sauts d'amplitude pour des fréquences de vitesse de rotation croissantes et décroissantes, la valeur de vitesse de rotation d'un petit saut d'amplitude (3, 4) et d'un grand saut d'amplitude (1, 2) étant dans un premier temps déterminée puis on examine si le saut d'amplitude plus grand (1, 2) se produit à une fréquence de vitesse de rotation qui est supérieure à celle du petit saut d'amplitude (3, 4), un comportement "hard-spring" existant alors, ou si le saut d'amplitude (1, 2) plus grand se produit à une fréquence de vitesse de rotation qui est inférieure à celle du petit saut d'amplitude (3, 4), un comportement "soft-spring" existant alors.

14. Procédé selon une des revendications 10 à 13, **caractérisé** par le fait qu'un comportement "hard-spring" est associé à une valeur ou plage de vitesse de rotation lorsqu'un comportement "soft-spring" ne peut pas avec certitude être associé à la valeur ou plage de vitesse de rotation.

15. Procédé selon une des revendications 1 à 14, **caractérisé** par le fait que la pièce est, pour la relaxation, excitée avec une force périodique non sinusoïdale.

16. Procédé selon une des revendications 1 à 15, **caractérisé** par le fait que pour relaxer la pièce avec les valeurs de vitesse de rotation sélectionnées, on utilise simultanément deux vibrateurs qui fonctionnent de préférence avec deux vitesses de rotation d'excitation légèrement différentes.

17. Procédé selon une des revendications 1 à 16, **caractérisé** par le fait que pendant la phase de relaxation, on mesure et on analyse le comportement de vibration de la pièce pour ne soumettre la pièce à des vibrations que le temps nécessaire pour obtenir un degré prédéterminé de relaxation de la pièce, une relaxation avec l'une des fréquences de vitesse de rotation sélectionnées étant interrompue dès que le comportement de vibration mesuré a, dans la plage de la (des) fréquence(s) de vitesse de rotation utilisée(s), atteint un degré prédéterminé de symétrie et/ou un rapport prédéterminé de la valeur maximale d'amplitude mesurée par rapport aux valeurs d'amplitude voisines (degré d'aplatissement).

Amplitude

A

B

f resonance

Frequency

fig. 1 a

force A

-X displacement +X

force B

-X displacement +X

fig. 1 b

fig. 1

EP 0 889 140 B1

Amplitude

frequency

soft spring behaviour

Amplitude

frequency

hard spring behaviour

fig. 2